(19) Europäisches Patentamt
European Patent Office
Office européen des brevets

(11) **EP 3 235 924 B1**

(12) **EUROPEAN PATENT SPECIFICATION**

(45) Date of publication and mention
of the grant of the patent:
**15.01.2020 Bulletin 2020/03**

(51) Int Cl.:
*C22C 38/58* (2006.01)    *C22C 38/54* (2006.01)
*C21D 8/02* (2006.01)    *C21D 6/00* (2006.01)
*C21D 9/46* (2006.01)    *C21D 1/18* (2006.01)
*C22C 38/00* (2006.01)    *C22C 38/02* (2006.01)
*C22C 38/06* (2006.01)    *C22C 38/44* (2006.01)
*C22C 38/46* (2006.01)    *C22C 38/48* (2006.01)
*C22C 38/50* (2006.01)

(21) Application number: **15869229.3**

(22) Date of filing: **08.12.2015**

(86) International application number:
**PCT/CN2015/096639**

(87) International publication number:
**WO 2016/095721 (23.06.2016 Gazette 2016/25)**

(54) **QUENCHED-TEMPERED HIGH-STRENGTH STEEL WITH YIELD STRENGTH OF 900 MPA TO 1080 MPA GRADE, AND MANUFACTURING METHOD THEREFOR**

VERGÜTETER UND GEHÄRTETER HOCHFESTER STAHL MIT STRECKGRENZE VON 900 MPA BIS 1080 MPA UND HERSTELLUNGSVERFAHREN DAFÜR

ACIER À HAUTE RÉSISTANCE TREMPÉ ET REVENU AYANT UNE LIMITE D'ÉLASTICITÉ DE NUANCE 900 MPA À 1080 MPA, ET PROCÉDÉ POUR LE FABRIQUER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2014 CN 201410810301**

(43) Date of publication of application:
**25.10.2017 Bulletin 2017/43**

(73) Proprietor: **Baoshan Iron & Steel Co., Ltd.**
**Shanghai 201900 (CN)**

(72) Inventors:
• **YANG, Ana**
**Shanghai 201900 (CN)**
• **LIU, Gang**
**Shanghai 201900 (CN)**
• **WANG, Wei**
**Shanghai 201900 (CN)**
• **YANG, Xiaozhen**
**Shanghai 201900 (CN)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
EP-A1- 2 664 682          WO-A1-2011/142285
CN-A- 1 840 724          CN-A- 1 840 724
CN-A- 101 397 640      CN-A- 102 134 680
CN-A- 102 134 680      CN-A- 102 505 096
CN-A- 102 560 274      CN-A- 103 060 715
CN-A- 103 555 910      CN-A- 104 532 157
JP-A- 2013 227 614      US-A1- 2014 116 578

**Description**

**Technical Field**

The present invention relates to a quenched-tempered high-strength steel and a manufacturing method thereof.

**Background Art**

The use of a high-strength, easy-to-weld structural steel for manufacture of members of mobile equipments such as beam structures in engineering machinery, crane jibs, dumper bodies and the like can reduce the dead weights of the equipments, reduce fuel consumption, and increase operating efficiency. As the international competition intensifies, it has already become a trend to use a high-strength, easy-to-weld structural steel to manufacture members of mobile equipments such as beam structures in harbor machinery, mining machinery, excavating machinery and loading machinery, crane jibs, dumper bodies and the like. Due to the requirements of high performance, upsizing and light weight in the development of engineering machinery, the strength of the steel for engineering machinery is increased continuously from 500-600 MPa to 700 MPa, 900 MPa, 1000 MPa and even 1100 Mpa in a short period of time. The harsh use environment and load conditions of the ultrahigh-strength steel for engineering machinery impose rigid requirements on the quality of the steel material, including strength, impact resistance, bending property, weldability, strip shape, etc.

At present, there are very few domestic enterprises having the ability of producing high-strength steel sheets having a yield strength of 900-1000 MPa grade. CN 10 256 0274 A discloses a method for producing a high-strength thick steel sheet having a yield strength of 1000 MPa grade, wherein a process of re-heating-quenching + tempering is employed, and extremely high requirements are imposed on an equipment for decoiling a steel sheet. CN 102 134 680 A discloses a method for producing a high-strength steel having a yield strength of 960 MPa grade, wherein a low carbon content and a high Cr content are employed in the design: C: 0.07%-0.09%, Cr: 1.05-1.15%, wherein microalloy elements Nb, Ti, V are absent and Cr has a high content according to this application, which is undesirable for welding. CN 101 397 640 A discloses a method for producing a high-strength steel sheet having a yield strength of 960 MPa grade, wherein a high Mo content and a high tempering temperature are employed in the design, wherein the Mo content is 0.45-0.57%, and the tempering temperature is 550-600°C.

CN 1840724A describes a super high strength steel plate and its production method. Its field of application is where low temperature toughness, high YS and good weldability are required. The process disclosed in CN 1840724A consists of pre-heating the billet to 1100-1250°C, hot rolling so that at least 60% draft is performed in the austenite region, FTR: 860-920°C, DQ at a rate of 5°C/s or more down to 350-550°C

The compositional designs in the prior art neither control the comprehensive properties of plasticity and toughness at joints, nor improve strength or toughness of a final steel sheet by controlling inclusions or heredity of microstructure and properties.

**Summary**

An object of the disclosure is to provide a quenched-tempered high-strength steel and a method for manufacturing the same, wherein the high-strength steel has a microstructure of tempered martensite, a yield strength of 900-1080 MPa, a tensile strength of 950-1200 MPa, an elongation >10%, and an impact energy at -40°C >40J.

To achieve the above object, the quenched-tempered high-strength steel according to the present invention is provided in accordance with claim 1. In particular, the quenched-tempered high-strength steel is as follows:

A quenched-tempered high-strength steel, with the components and amounts thereof by weight percentage being: C:0.16-0.20%, Si: 0.10-0.30%, Mn: 0.80-1.60%, Cr: 0.20-0.70%, Mo: 0.10-0.45%, Ni: 0.10-0.50%, Nb: 0.010-0.030%, Ti: 0.010-0.030%, V: 0.010-0.050%, B: 0.0005-0.0030%, Al: 0.02-0.06%, Ca: 0.001-0.004%, N: 0.002-0.005%, P≤0.020%, S≤0.010%, O≤0.008%, and the balance of Fe and unavoidable impurities, wherein the above elements meet the following relationships: Ceq 0.51-0.60% , Ceq=C+Mn/6+(Cr+Mo+V)/5+(Ni+Cu)/15 ; 3.7≤Ti/N≤7.0 ; 1.0≤Ca/S≤3.0; 0.8%≤Mo+0.8Ni+0.4Cr+6V≤1.3%.

Further, the quenched-tempered high-strength steel has a yield strength of 900-1080 MPa, a tensile strength of 950-1200 MPa, an elongation >10%, an impact energy at - 40°C >40J, wherein the steel has a microstructure of tempered martensite.

In the compositional design of the steel according to the invention:

Carbon: Carbon has the effect of solid solution strengthening. It regulates the strength, plasticity and toughness of the martensitic structure. As tested, after re-heating and quenching, the tensile strength of low-carbon martensite and the carbon content have the following relationship: $Rm=2510C(\%)+790(MPa)$, wherein Rm is tensile strength.

When the carbon content is 0.16% or higher, a tensile strength at a quenched state, which is greater than 1100 MPa can be guaranteed. Then, the strength is further reduced by tempering, so as to improve the toughness. An unduly high amount of carbon will result in increase of the carbon equivalent on the whole, leading to easy cracking during welding. The carbon content according to the disclosure is in the range of 0.16-0.20%.

Silicon: Si in an amount of 0.10% or higher has a good effect of deoxygenation, but red scale tends to occur when the Si content exceeds 0.30%. If the Si content is excessively high, the toughness of the martensitic high-strength steel tends to be degraded. The silicon content according to the disclosure is in the range of 0.10-0.30%.

Manganese: Mn in an amount of 0.8% or higher can increase the hardenability of the steel. When the Mn content exceeds 1.6%, segregation and inclusions such as MnS tend to occur, degrading the toughness of the martensitic high-strength steel. The Mn content according to the disclosure is in the range of 0.80-1.60%.

Chromium: Cr element in an amount of 0.2% or higher can increase the hardenability of the steel, facilitating formation of a full martensitic structure during quenching. At a tempering temperature in the range of about 400-550 °C, Cr may form carbides of Cr, and has the effect of resisting softening during medium-temperature tempering. If the Cr content exceeds 0.70%, large sparks will occur during welding, affecting the welding quality. The Cr content according to the disclosure is in the range of 0.20-0.70%.

Molybdenum: Mo element in an amount of 0.10% or higher can increase the hardenability of the steel, facilitating formation of a full martensitic structure during quenching. At a high temperature of 400 °C or higher, Mo can react with C to form compound particles having the effect of resisting softening during high-temperature tempering and softening of welded joints. An excessively high Mo content will lead to increase of the carbon equivalent, degrading weldability. Meanwhile, as Mo is a precious metal, the cost will be increased. The Mo content according to the disclosure is 0.10-0.45%.

Nickel: Ni element in an amount of 0.10% or higher has the effect of refining the martensitic structure and improving the steel toughness. An excessively high content of Ni will lead to increase of the carbon equivalent, degrading weldability. Meanwhile, as Ni is a precious metal, the cost will be increased. The Ni content according to the disclosure is 0.10-0.50%.

Niobium, titanium and vanadium: Nb, Ti and V are microalloy elements which form nano-scale precipitates with C, N and other elements, inhibiting growth of austenite grains during heating. Nb can increase the non-recrystallization critical temperature Tnr and expand the production window. The fine precipitate particles of Ti can improve weldability. V reacts with N and C during tempering to precipitate nano-scale V(C,N) particles, leading to improved steel strength. According to the disclosure, the Nb content is in the range of 0.010-0.030%, the Ti content is in the range of 0.010-0.030%, and the V content is in the range of 0.010-0.050%.

Boron: A trace amount of B can improve the hardenability and strength of the steel. When B exceeds 0.0030%, segregation tends to occur, and borocarbide compounds form, leading to serious degradation of the toughness. The B content according to the disclosure is in the range of 0.0005-0.0030%.

Aluminum: Al is used as a deoxidizer. Addition of 0.02% or more Al to the steel can refine grains and improve the impact toughness. If the Al content exceeds 0.06%, inclusion flaws of Al oxides tend to occur. The Al content according to the disclosure is in the range of 0.02-0.06%.

Calcium: In the smelting of steel, Ca element in an amount of more than 0.001% can act as a purifier to improve the toughness of the steel. If the Ca content exceeds 0.004%, large-size Ca compounds tend to form, which degrades the toughness in turn. The Ca content according to the disclosure is 0.001-0.004%.

Nitrogen: The disclosure requires strict control of the content of N element. In a tempering process, N element having a content of 0.002% or higher can react with V and C to form nano-scale V(C,N) particles, and thus have the effect of precipitation strengthening. In a welding process, softening of a heat-affected zone can also be inhibited by the precipitation strengthening. If the N content exceeds 0.005%, coarse precipitate particles tend to form, leading to degraded toughness. The N content according to the disclosure is 0.002-0.005%.

Phosphorus, sulfur and oxygen: As impurity elements, P, S and O affect steel plasticity and toughness. According to the disclosure, these elements are controlled in the ranges of P$\leq$0.020%, S$\leq$0.010%, O$\leq$0.008%.

The carbon equivalent Ceq of an off-line quenched + tempered high-strength steel having a yield strength of 900-1080 MPa needs to meet: Ceq 0.51-0.60%, Ceq=C+Mn/6+(Cr+Mo+V)/5+(Ni+Cu)/150. If Ceq is too low, softening of welded joints tends to occur; if Ceq is too high, microcracking tends to occur during welding.

According to the invention, control of 0.8%$\leq$Mo+0.8Ni+0.4Cr+6V$\leq$1.3% is mainly used to guarantee equal-strength matching welding of the 900-1080 MPa high-strength steel, and adjust the strength and low-temperature toughness of a welding heat affected zone to realize optimal matching with a parent steel sheet in terms of strength and low-temperature toughness. Mo, Ni and Cr elements all can decrease the critical cooling speed of the steel, increase the hardenability of the steel, and increase the strength of the welded joints. Mo reacts with C to form compounds at high temperatures, and it has the effect of resisting softening of the welded joints. Mo and Ni elements both have the effect of refining structures and improving toughness. V and N react to form nano-scale V(C, N) particles which can resist softening of the joints. The collaboration of Mo, Ni, Cr and V elements can regulate the strength and toughness of the welding heat affected zone based on the strength of the parent material. If lower than 0.8%, both the strength and low-temperature toughness of the welded joints will be low; if higher than 1.3%, the strength of the welded joints will be rather high, and thus weld cracking tends to occur.

The control of $3.7 \leq Ti/N \leq 7.0$ can protect B atoms in the steel, so that B can be solid-dissolved to increase the hardenability. A suitable ratio of Ti to N helps to control the size of Ti precipitate particles, and improve the strength and toughness of the parent material and joints.

Control of $1.0 \leq Ca/S \leq 3.0$ can spheroidize sulfides in the steel, so as to improve the low-temperature toughness and weldability of the steel.

A method of producing such a quenched-tempered high-strength steel according to the invention comprises the steps of claim 1. In particular the method comprises the following steps:

1) Smelting and casting of molten steel

A composition as described below is smelted in a converter or electrical furnace, refined, and cast to a cast blank, wherein the components and amounts thereof by weight percentage of the composition are: C:0.16-0.20%, Si: 0.10-0.30%, Mn: 0.80-1.60%, Cr: 0.20-0.70%, Mo: 0.10-0.45%, Ni: 0.10-0.50%, Nb: 0.010-0.030%, Ti: 0.010-0.030%, V: 0.010-0.050%, B: 0.0005-0.0030%, Al: 0.02-0.06%, Ca: 0.001-0.004%, N: 0.002-0.005%, P$\leq$0.020%, S$\leq$0.010%, O$\leq$0.008%, and the balance of Fe and unavoidable impurities, wherein the above elements meet the following relationships:

Ceq 0.51-0.60%, Ceq=C+Mn/6+(Cr+Mo+V)/5+(Ni+Cu)/15; 0.8%$\leq$Mo+0.8Ni+0.4Cr+6V$\leq$1.3%; 3.7$\leq$Ti/N$\leq$7.0; 1.0$\leq$Ca/S$\leq$3.0;

2) Heating

The cast blank is heated at 1150-1270°C in a furnace, wherein, when the temperature of the core of the cast blank arrives at the temperature of the furnace, the temperature is held, and the holding time is >1.5h;

3) Rolling

The cast blank is rolled to a target thickness by single-stand reciprocating rolling or multi-stand hot continuous rolling, wherein a rolling reduction rate at a final rolling path is >15%; a final rolling temperature is 820-920 °C, and the final rolling temperature Tf meets: $Ar_3 < Tf < Tnr$, wherein $Ar_3$ is a temperature at which hypo-eutectoid steel austenite begins to convert to ferrite: $Ar_3 = 901 - 325C - 92Mn - 126Cr - 67Ni - 149Mo$; Tnr is non-recrystallization critical temperature:

$$Tnr = 887 + 464C + (6445Nb - 644\sqrt{Nb}) + (732V - 230\sqrt{V}) + 890Ti + 363Al - 357Si;$$

4) Cooling

After the hot rolling, the rolled member is coiled at a temperature in the range of 480-Bs °C, followed by air cooling to room temperature; wherein

$$Bs = 630 - 45Mn - 40V - 35Si - 30Cr - 25Mo - 20Ni;$$

5) Heat treatment

Quenching: A quenching heating temperature is $Ac_3 + (30-80)$°C, and when the temperature of the core of the steel sheet arrives at the temperature of the furnace, the temperature is held and the holding time is 5-40 min wherein $Ac_3$ is a temperature at which transformation of austenite is over,

$$Ac_3 = 955 - 350C - 25Mn + 51Si + 106Nb + 100Ti + 68Al - 11Cr - 33Ni - 16Cu + 67Mo;$$

wherein the quenching cooling speed is $V > e^{(5.3 - 2.53C - 0.16Si - 0.82Mn - 0.95Cr - 1.87Mo - 160B)}$°C/s;

Tempering: A tempering temperature is 400-550°C; when the temperature of the core of the steel sheet arrives at the temperature of the furnace, the temperature is held, and the holding time is 20- 180min.

Further, the quenched-tempered high-strength steel having a yield strength of 900 MPa -1000 MPa grade has a yield strength of 900-1080 MPa, a tensile strength of 950-1200 MPa, an elongation >10%, an impact energy at -40°C >40J, wherein the steel has a microstructure of tempered martensite.

In the following relations involved in the present disclosure: $Ceq=C+Mn/6+(Cr+Mo+V)/5+(Ni+Cu)/15$, $Mo+0.8Ni+0.4Cr+6V$, $Ti/N$, $Ca/S$, the element symbols represent the weight percentages of the corresponding elements. In the following calculation formulae involved in the present disclosure: $Ar_3=901-325C-92Mn-126Cr-67Ni-149Mo$, $Tnr=887+464C+(6445Nb-644sqrt(Nb))+(732V-230sqrt(V))+890Ti+363Al-357Si$, $Bs=630-45Mn-40V-35Si-30Cr-25Mo-20Ni$, $Ac_3=955-350C-25Mn+51Si+106Nb+100Ti+68Al-11Cr-33Ni-16Cu+67Mo$, and $V>e^{(5.3-2.53C-0.16Si-0.82Mn-0.95Cr-1.87Mo-160B)}$, each of the element symbols represents the weight percentage of the corresponding element $\times$ 100.

In the method for producing a quenched-tempered high-strength steel having a yield strength of 900-1080 MPa according to the invention, in the process of heating the cast blank, the heating temperature is controlled to be greater than 1150°C, and the holding time of the core is >1.5h, so that full solid dissolution of the alloy elements can be ensured. If the heating temperature exceeds 1270°C, austenite grains will grow excessively, and thus the inter-grain binding force will be weakened, such that cracking tends to occur during rolling. In addition, if the heating temperature exceeds 1270°C, decarburization tends to occur at the surface of the steel blank, affecting the mechanical properties of the final product.

In order to ensure rolling in an austenite zone, the final rolling temperature is greater than $Ar_3$; in order to ensure rolling in a non-recrystallization zone of austenite, the final rolling temperature is less than Tnr. Rolling in the non-recrystallization zone of austenite can refine austenite grains and the cooled martensitic structure. After subsequent heat treatment, the grain size and toughness of the steel have some heredity, so that the strength and toughness of the heated steel can be improved. At the same time, rolling at a large reduction rate is conducted to form sufficient deformation energy in the non-recrystallization zone, induce recrystallization of austenite in the range of $Ar_3$-Tnr, and refine grains.

In the cooling process, coiling is conducted at a temperature in the range of 480-Bs °C in order to obtain fine bainite structure and improve the steel toughness. After subsequent heat treatment, the grain size and toughness of the steel have some heredity, so that the strength and toughness of the heated steel can be improved.

In the quenching heat treatment process, if the heating temperature is lower than $Ac_3$+30°C, or the holding time is less than 5 min after the temperature of the core of the steel sheet arrives at the temperature of the furnace, it will be difficult for the alloy to solid dissolve sufficiently. If the heating temperature is higher than $Ac_3$+80°C, or the holding time is more than 40 min after the temperature of the core of the steel sheet arrives at the temperature of the furnace, austenite grains tend to grow. By controlling the quenching heating temperature and quenching heating time in narrow ranges, obtainment of fine austenite grains can be ensured, so as to refine the martensitic structure after the quenching and improve the strength and toughness of the steel.

In the tempering heat treatment process, for steel of the chemical composition system according to the invention, if the tempering temperature exceeds 400 °C and the holding time is 20 min or longer after the temperature of the core of the steel sheet arrives at the temperature of the furnace, oversaturated carbon atoms in the quenched martensite will precipitate to form spherical $Fe_3C$ cementite, and alloy Mo and V will react with C at this temperature to form fine alloy carbides, so as to improve the plasticity and toughness of the steel, and eliminate effectively the internal stress in the steel. If the tempering temperature exceeds 550°C or the holding time is too long, the spherical $Fe_3C$ cementite and the alloy carbides will be coarsened, which will degrade the toughness of the steel and reduce the strength of the steel. Optimal matching between the strength and the toughness can be ensured by regulating the tempering temperature and the tempering time.

The beneficial effects of the invention include:

By using a process of controlling rolling, controlling cooling, and off-line quenching + tempering, the invention makes control with respect to the chemical compositional design, the structure of the parent material, the quenching heating temperature, the tempering heating temperature and the like, so as to obtain good elongation, low-temperature toughness and other properties of the steel while guaranteeing ultrahigh strength.

As compared with the prior art, the invention controls the match of strength and toughness between parent material and welded joint by controlling the contents such elements as Mo, Ni, Cr and V, improves the toughness of the parent steel sheet and welded joints by controlling the ratio of Ti to N and the ratio of Ca to S, and improves the strength and toughness of the final steel sheet by a process utilizing the hereditary nature of the structure and properties.

**Description of the Drawings**

Fig. 1 is an image of the typical metallographical structure of the test steel of Example 1 according to the invention;
Fig. 2 is an image of the typical metallographical structure of the test steel of Example 3 according to the invention;

Fig. 3 is an image of the typical metallographical structure of the test steel of Example 6 according to the invention.

**Detailed Description**

The invention will be further illustrated with reference to the following specific Examples.

The process flow for producing the ultrahigh strength steel of the invention is as follows: steel making in a converter or electric furnace → secondary refining → continuous casting → heating → rolling → cooling → heat treatment.

A method of producing a quenched-tempered high-strength steel having a yield strength of 900-1080 MPa grade according to Examples 1-10 in the invention comprises the following steps:

1)Smelting, casting: A 50 kg vacuum electric furnace was used for smelting. The compositions are shown in Table 1. The smelted liquid steel was cast into cast blanks having a thickness of 120mm. The cast blanks were placed into an electric furnace for heating.

2)Rolling: The cast blanks were rolled into steel sheets having a target thickness of 10 mm in multiple paths. The final rolling temperature was 820-920°C. At the same time, the final rolling temperature Tf met: $Ar_3 < Tf < Tnr$. The reduction rate at the final path was set at 17%.

3)Cooling: after rolling, the rolled members were subjected to on-line laminar cooling. The final cooling temperature was controlled in the range of 480-Bs °C, wherein Bs was a temperature at which transformation of Bainite began. The rolled members were coiled, and cooled to room temperature. Quenching heat treatment process: In the quenching heat treatment process, the quenching heating temperature was the final temperature of austenitic transformation $Ac_3 + (30\text{-}80)°C$; the quenching heating time was 5-40 min after the temperature of the core of the steel sheet arrived at the temperature of the furnace; the quenching cooling speed $V > e^{(5.3-2.53C-0.16Si-0.82Mn-0.95Cr-1.87Mo-160B)}$°C/s; the steel was quenching cooled to (Ms-150) °C or less.

5)Tempering heat treatment process: The tempering temperature was 400-550 °C; the tempering time was 20-180 min after the temperature of the core of the steel sheet arrived at the temperature of the furnace. Then, a quenched-tempered high-strength steel having a yield strength of 900-1080 MPa grade according to the invention was obtained.

6)The quenched-tempered steel sheet was subjected to longitudinal tensile testing and longitudinal impact testing.

The specific components and process conditions are shown in Tables 1 and 2. The properties of the sample sheets in the various Examples are shown in Table 3.

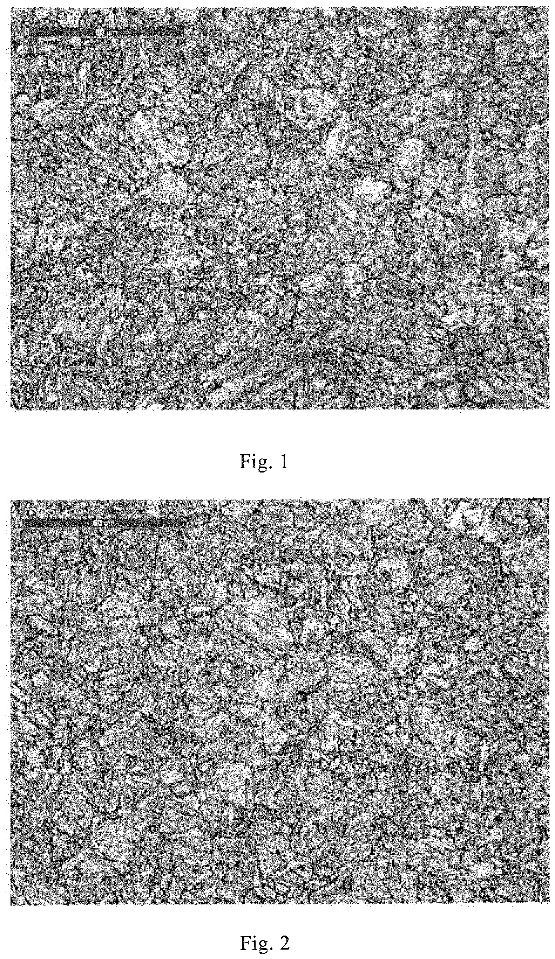

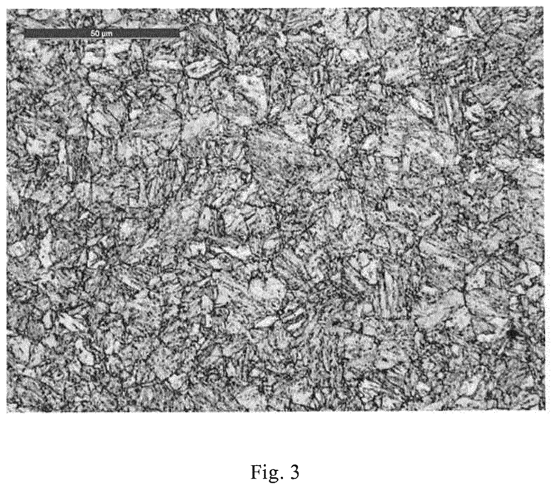

Figs. 1-3 show the metallographical structure images of the test steels of Examples 1, 3 and 6. As can be seen from the metallographical images in Figs. 1-3, the metallographical structures of the final steel sheets are homogeneous equiaxed tempered martensite, and the structures are fine.

By using a process of controlling rolling, controlling cooling, and off-line quenching + tempering, the invention makes control with respect to the chemical compositional design, the structure of the parent material, the quenching heating temperature, the tempering heating temperature and the like, so as to obtain good elongation, low-temperature toughness and other properties of the steel while guaranteeing ultrahigh strength.

Table 1 unit: weight%

| Ex. | C | Si | Mn | Cr | Mo | V | Ni | Nb | Ti | B | Al | Ca | P | S | N | O |
|---|---|---|---|---|---|---|---|---|---|---|---|---|---|---|---|---|
| 1 | 0.16 | 0.27 | 1.21 | 0.7 | 0.22 | 0.022 | 0.37 | 0.01 | 0.011 | 0.0015 | 0.051 | 0.0022 | 0.007 | 0.002 | 0.0021 | 0.0045 |
| 2 | 0.16 | 0.27 | 1.21 | 0.7 | 0.22 | 0.022 | 0.37 | 0.01 | 0.011 | 0.0015 | 0.051 | 0.0022 | 0.007 | 0.002 | 0.0021 | 0.0045 |
| 3 | 0.16 | 0.3 | 1.6 | 0.54 | 0.1 | 0.036 | 0.48 | 0.02 | 0.03 | 0.00052 | 0.06 | 0.0016 | 0.016 | 0.0013 | 0.0045 | 0.0072 |
| 4 | 0.16 | 0.3 | 1.6 | 0.54 | 0.1 | 0.036 | 0.48 | 0.02 | 0.03 | 0.00052 | 0.06 | 0.0016 | 0.016 | 0.0013 | 0.0045 | 0.0072 |
| 5 | 0.19 | 0.14 | 1.03 | 0.2 | 0.45 | 0.01 | 0.27 | 0.03 | 0.02 | 0.0016 | 0.035 | 0.004 | 0.015 | 0.0014 | 0.0036 | 0.0034 |
| 6 | 0.19 | 0.14 | 1.03 | 0.2 | 0.45 | 0.01 | 0.27 | 0.03 | 0.02 | 0.0016 | 0.035 | 0.004 | 0.015 | 0.0014 | 0.0036 | 0.0034 |
| 7 | 0.17 | 0.18 | 1.45 | 0.31 | 0.41 | 0.045 | 0.1 | 0.012 | 0.014 | 0.0017 | 0.022 | 0.0037 | 0.016 | 0.0016 | 0.0037 | 0.0067 |
| 8 | 0.17 | 0.18 | 1.45 | 0.31 | 0.41 | 0.045 | 0.1 | 0.012 | 0.014 | 0.0017 | 0.022 | 0.0037 | 0.016 | 0.0016 | 0.0037 | 0.0067 |
| 9 | 0.2 | 0.1 | 0.8 | 0.65 | 0.32 | 0.05 | 0.5 | 0.018 | 0.015 | 0.003 | 0.026 | 0.0026 | 0.012 | 0.0016 | 0.0026 | 0.0041 |
| 10 | 0.2 | 0.1 | 0.8 | 0.65 | 0.32 | 0.05 | 0.5 | 0.018 | 0.015 | 0.003 | 0.026 | 0.0026 | 0.012 | 0.0016 | 0.0026 | 0.0041 |

Table 2

| Ex. | Heating Temperature °C | Holding time, min | Final rolling temperature, °C | Final cooling temperature after rolling, °C | Quenching heating temperature, °C | Quenching holding time min | Quenching cooling speed, °C/s | Final cooling temperature after quenching, °C/s | Tempering heating temperature, °C | Tempering holding time min |
|---|---|---|---|---|---|---|---|---|---|---|
| 1 | 1250 | 130 | 851 | 493 | 920 | 15 | 26 | 120 | 420 | 80 |
| 2 | 1220 | 160 | 870 | 508 | 910 | 30 | 45 | 212 | 540 | 30 |
| 3 | 1240 | 140 | 866 | 513 | 900 | 20 | 57 | 232 | 430 | 70 |
| 4 | 1260 | 210 | 855 | 517 | 930 | 30 | 46 | 210 | 550 | 20 |
| 5 | 1170 | 100 | 823 | 515 | 960 | 5 | 75 | 64 | 410 | 85 |
| 6 | 1270 | 110 | 891 | 504 | 935 | 40 | 84 | 26 | 500 | 35 |
| 7 | 1210 | 120 | 866 | 506 | 940 | 25 | 35 | 35 | 450 | 65 |
| 8 | 1190 | 190 | 903 | 512 | 950 | 20 | 36 | 153 | 530 | 30 |
| 9 | 1250 | 130 | 876 | 497 | 920 | 15 | 46 | 43 | 400 | 180 |
| 10 | 1230 | 110 | 844 | 513 | 910 | 10 | 64 | 76 | 510 | 30 |

Table 3

| Ex. | Yield strength MPa | Tensile strength MPa | Elongation % | Impact energy at -40°C (7.5*10*55mm), J | | |
|---|---|---|---|---|---|---|
| 1 | 1015 | 1082 | 13.4 | 88 | 83 | 95 |
| 2 | 917 | 967 | 15.2 | 120 | 103 | 107 |
| 3 | 1057 | 1119 | 12.6 | 53 | 60 | 49 |
| 4 | 983 | 1016 | 14.3 | 87 | 75 | 91 |
| 5 | 1078 | 1121 | 11.8 | 59 | 46 | 68 |
| 6 | 1025 | 1077 | 13.7 | 70 | 85 | 79 |
| 7 | 1006 | 1074 | 14.2 | 110 | 107 | 99 |
| 8 | 942 | 980 | 15.4 | 105 | 122 | 113 |
| 9 | 1074 | 1119 | 12.3 | 63 | 79 | 60 |
| 10 | 1046 | 1097 | 13.1 | 79 | 58 | 88 |
| Note: The test results of the impact energy at -40°C in the three columns represent the test results of three parallel samples. | | | | | | |

**Claims**

1. A quenched-tempered high-strength steel consisting of the following components by weight percentage: C:0.16-0.20%, Si: 0.10-0.30%, Mn: 0.80-1.60%, Cr: 0.20-0.70%, Mo: 0.10-0.45%, Ni: 0.10-0.50%, Nb: 0.010-0.030%, Ti: 0.010-0.030%, V: 0.010-0.050%, B: 0.0005-0.0030%, Al: 0.02-0.06%, Ca: 0.001-0.004%, N: 0.002-0.005%, P≤0.020%, S≤0.010%, O≤0.008%, the balance of Fe and unavoidable impurities, wherein the above elements meet the following relationships:

   Ceq 0.51-0.60%,
   Ceq=C+Mn/6+(Cr+Mo+V)/5+(Ni+Cu)/15;0.8%≤Mo+0.8Ni+0.4Cr+6V≤1.3%; 3.7≤Ti/N≤7.0; 1.0≤Ca/S≤3.0;
   wherein the quenched-tempered high-strength steel has a microstructure of tempered martensite; and wherein the quenched-tempered high-strength steel has a yield strength of 900-1080MPa, a tensile strength of 950-1200MPa, an elongation >10%, and an impact energy at -40°C >40J.

2. A method of producing a quenched-tempered high-strength steel, comprising the following steps:

   1) Smelting and casting
   smelting a composition as described below in a converter or electrical furnace, refining, and casting to a cast blank, wherein the composition consists of the following components by weight percentage: C:0.16-0.20%, Si: 0.10-0.30%, Mn: 0.80-1.60%, Cr: 0.20-0.70%, Mo: 0.10-0.45%, Ni: 0.10-0.50%, Nb: 0.010-0.030%, Ti: 0.010-0.030%, V: 0.010-0.050%, B: 0.0005-0.0030%, Al: 0.02-0.06%, Ca: 0.001-0.004%, N: 0.002-0.005%, P<0.020%, S<0.010%, O≤0.008%, the balance of Fe and unavoidable impurities, wherein the above elements meet the following relationships:

   Ceq 0.51-0.60%, Ceq=C+Mn/6+(Cr+Mo+V)/5+(Ni+Cu)/15;
   0.8%≤Mo+0.8Ni+0.4Cr+6V≤1.3%; 3.7≤Ti/N≤7.0; 1.0≤Ca/S≤3.0;

   2) Heating
   heating the cast blank at 1150-1270°C in a furnace, wherein, when the temperature of the core of the cast blank arrives at the temperature of the furnace, the temperature is held, and the holding time is >1.5h;
   3) Rolling
   rolling the cast blank to a target thickness by single-stand reciprocating rolling or multi-stand hot continuous rolling, wherein a rolling reduction rate at a final rolling path is >15%; a final rolling temperature is 820-920 °C, and the final rolling temperature Tf meets: $Ar_3<Tf<Tnr$, wherein $Ar_3$ is a temperature at which hypo-eutectoid steel austenite begins to convert to ferrite, and Tnr is non-recrystallization critical temperature: $Ar_3$=901-325C-

92Mn-126Cr-67Ni-149Mo; Tnr=887+464C+(6445Nb-644sqrt(Nb))+(732V-230sqrt(V))+890Ti+363Al-357Si;

4) Cooling

coiling a rolled member at a temperature in the range of 480-Bs °C after hot rolling, followed by air cooling to room temperature; wherein

Bs=630-45Mn-40V-35Si-30Cr-25Mo-20Ni;

5) Heat treatment

quenching at a quenching heating temperature of $Ac_3$+(30-80)°C, wherein $Ac_3$ is a temperature at which transformation of austenite is over:

Ac3=955-350C-25Mn+51Si+106Nb+100Ti+68Al-11Cr-33Ni-16Cu+67Mo; when a core of a steel sheet arrives at a temperature of the furnace, the temperature is held for a holding time of 5-40 min, wherein Ms is a temperature at which transformation of martensite begins:

$$Ms=539-423C-30.4Mn-17.7Ni-12.1Cr-11.0Si-7.0Mo;$$

wherein a quenching cooling speed $V > e^{(5.3-2.53C-0.16Si-0.82Mn-0.95Cr-1.87Mo-160B)}$°C/s;

tempering at a tempering temperature of 400-550°C; when the temperature of the core of the steel sheet arrives at the temperature of the furnace, the temperature is held for a holding time of 20- 180min.

**Patentansprüche**

1.  Vergüteter und gehärteter hochfester Stahl, bestehend aus den folgenden Komponenten in Gewichtsprozent: C: 0,16-0,20 %, Si: 0,10-0,30 %, Mn: 0,80-1,60 %, Cr: 0,20-0,70 %, Mo: 0,10-0,45 %, Ni: 0,10-0,50 %, Nb: 0,010-0,030 %, Ti: 0,010-0,030 %, V: 0,010-0,050 %, B: 0,0005-0,0030 %, Al: 0,02-0,06 %, Ca: 0,001-0,004 %, N: 0,002-0,005 %, P≤0.020 % S≤0,010 %, O≤0,008 %, dem Ausgleich von Fe und unvermeidbaren Verunreinigungen, wobei die oben genannten Elemente die folgenden Beziehungen erfüllen:
    Ceq 0,51-0,60 %,

$$Ceq=C+Mn/6+(Cr+Mo+V)/5+(Ni+Cu)/15;$$

$$0,8 \% \leq Mo+0,8Ni+0,4Cr+6V \leq 1,3 \%;$$

$$3,7 \leq Ti/N \leq 7,0;$$

$$1,0 \leq Ca/S \leq 3,0;$$

wobei der vergütete und gehärtete hochfeste Stahl eine Mikrostruktur von gehärtetem Martensit aufweist; und wobei der vergütete und gehärtete hochfeste Stahl eine Streckgrenze von 900-1080 MPa, eine Zugfestigkeit von 950-1200 MPa, eine Verlängerung >10 % und eine Aufprallenergie bei -40 °C >40 J aufweist.

2.  Herstellungsverfahren eines vergüteten und gehärteten hochfesten Stahls, die folgenden Schritte aufweisend:

    1) Schmelzen und Gießen
    Schmelzen einer wie oben beschriebenen Zusammensetzung in einem Wandler oder elektrischen Ofen, Raffination, und Gießen in einen Gussrohling, wobei die Zusammensetzung aus den folgenden Komponenten in Gewichtsprozent besteht: C: 0,16-0,20 %, Si: 0,10-0,30 %, Mn: 0,80-1,60 %, Cr: 0,20-0,70 %, Mo: 0,10-0,45 %, Ni: 0,10-0,50 %, Nb: 0,010-0,030 %, Ti: 0,010-0,030 %, V: 0,010-0,050 %, B: 0,0005-0,0030 %, Al: 0,02-0,06 %, Ca: 0,001-0,004 %, N: 0,002-0,005 %, P≤0,020 %, S≤0,010 %, O≤0,008 %, dem Ausgleich von Fe und unvermeidbaren Verunreinigungen, wobei die oben genannten Elemente die folgenden Beziehungen erfüllen:
    Ceq 0,51-0,60 %,

$$Ceq=C+Mn/6+(Cr+Mo+V)/5+(Ni+Cu)/15;$$

$$0,8\ \%\leq Mo+0,8Ni+0,4Cr+6V\leq 1,3\ \%;$$

$$3,7\leq Ti/N\leq 7,0;$$

$$1,0\leq Ca/S\leq 3,0;$$

2) Erwärmen

Erwärmen des Gussrohlings bei 1150-1270 °C in einem Ofen, wobei, wenn die Temperatur des Kerns des Gussrohlings die Temperatur des Ofens erreicht, die Temperatur gehalten wird und die Haltezeit bei >1,5 h liegt;

3) Walzen

Walzen des Gussrohlings zu einer Solldicke durch eingerüstiges Walzen mit Hin- und Herbewegung oder durch kontinuierliches mehrgerüstiges Warmwalzen, wobei eine Walzverringerungsrate bei einem End-Walzpfad >15 % ist, eine End-Walztemperatur bei 820-920 °C liegt und die End-Walztemperatur Tf erfüllt: $Ar_3<Tf<Tnr$, wobei $Ar_3$ eine Temperatur ist, bei der hypoeutektoider Stahlaustenit beginnt, sich in Ferrit zu verwandeln, und Tnr eine kritische Nicht-Rekristallisationstemperatur ist: $Ar_3=901-325C-92Mn-126Cr-67Ni-149Mo$;

$$Tnr=887+464C+(6445Nb-644sqrt(Nb))+(732V-230sqrt(V))+890Ti+363Al-357Si;$$

4) Kühlung

Wickeln eines gewalzten Bauteils bei einer Temperatur im Bereich von 480-Bs °C nach Warmwalzen, gefolgt von Luftkühlen auf Raumtemperatur; wobei

$$Bs=630-45Mn-40V-35Si-30Cr-25Mo-20Ni;$$

5) Wärmebehandlung

Vergütung bei einer vergütenden Erwärmungstemperatur von $Ac_3+(30-80)$ °C, wobei $Ac_3$ eine Temperatur ist, bei der eine Transformation von Austenit abgeschlossen ist:

$$Ac3=955-350C-25Mn+51Si+106Nb+100Ti+68Al-11Cr-33Ni-16Cu+67Mo;$$

wenn ein Kern eines Stahlblechs eine Temperatur des Ofens erreich, wird die Temperatur für eine Haltezeit von 5-40 Min. gehalten, wobei Ms eine Temperatur ist, bei der eine Transformation von Martensit beginnt: $Ms=539-423C-30,4Mn-17,7Ni-12,1Cr-11,0Si-7,0Mo$;

wobei eine vergütende Abkühlgeschwindigkeit $V >e^{(5,3-2,53C-0,16Si-0,82Mn-0,95Cr-1,87Mo-160B)\circ}C/s$;

Härten bei einer Härtetemperatur von 400-550 °C;

wenn die Temperatur des Kerns des Stahlblechs die Temperatur des Ofens erreicht, wird die Temperatur für eine Haltezeit von 20-180 Min. gehalten.

## Revendications

**1.** Acier à haute résistance trempé et revenu constitué des composants suivants en pourcentage en poids : C : 0,16-0,20 %, Si : 0,10-0,30 %, Mn : 0,80-1,60 %, Cr : 0,20-0,70 %, Mo : 0,10-0,45 %, Ni : 0,10-0,50 %, Nb : 0,010-0,030 %, Ti : 0,010-0,030 %, V : 0,010-0,050 %, B : 0,0005-0,0030 %, Al : 0,02-0,06 %, Ca : 0,001-0,004 %, N : 0,002-0,005 %, P ≤ 0,020 %, S ≤ 0,010 %, O ≤ 0,008 %, le restant étant constitué de Fe et d'impuretés inévitables, dans lequel les éléments précités répondent aux relations suivantes :

Ceq 0,51-0,60 %

$$Ceq = C+Mn/6+(Cr+Mo+V)/5+(Ni+Cu)/15 \; ; \; 0,8\% \leq Mo+0,8Ni+0,4Cr$$

$$+6V \leq 1,3\% \; ; \; 3,7 \leq Ti/N \leq 7,0 \; ; \; 1,0 \leq Ca/S \leq 3,0 \; ;$$

dans lequel l'acier à haute résistance trempé et revenu a une microstructure de martensite revenue ; et dans lequel l'acier à haute résistance trempé et revenu a une limite d'élasticité de 900-1080 MPa, une résistance à la traction de 950-1200 MPa, un allongement > 10 % et une énergie d'impact à -40 °C > 40 J.

2. Procédé de production d'un acier à haute résistance trempé et revenu comprenant les étapes suivantes :

1) Fusion et coulée
fusion d'une composition comme décrite ci-dessous dans un convertisseur ou un four électrique, affinage et coulée en une ébauche coulée, dans lequel la composition est constituée des composants suivants en pourcentage en poids: C : 0,16-0,20 %, Si : 0,10-0,30 %, Mn : 0,80-1,60 %, Cr : 0,20-0,70 %, Mo : 0,10-0,45 %, Ni : 0,10-0,50 %, Nb : 0,010-0,030 %, Ti : 0,010-0,030 %, V : 0,010-0,050 %, B : 0,0005-0,0030 %, Al : 0,02-0,06 %, Ca : 0,001-0,004 %, N : 0,002-0,005 %, P $\leq$ 0,020 %, S $\leq$ 0,010 %, O $\leq$ 0,008 %, le restant étant constitué de Fe et d'impuretés inévitables, dans lequel les éléments précités répondent aux relations suivantes :

$$Ceq \; 0,51\text{-}0,60\% , \; Ceq = C+Mn/6+(Cr+Mo+V)/5+(Ni+Cu)/15 \; ;$$

$0,8\% \leq Mo+0,8Ni+0,4Cr+6V \leq 1,3\% \; ; \; 3,7 \leq Ti/N \leq 7,0 \; ; \; 1,0 \leq Ca/S \leq 3,0 \; ;$
2) Chauffage
chauffage de l'ébauche coulée à 1150-1270 °C dans un four, dans lequel, lorsque la température du cœur de l'ébauche coulée arrive à la température du four, la température est maintenue, et le temps de maintien est > 1,5 h ;
3) Laminage
laminage de l'ébauche coulée jusqu'à une épaisseur cible par laminage réversible monocage ou laminage continu à chaud multi-cage, dans lequel un taux de réduction de laminage dans un trajet de laminage final est > 15 % ; une température de laminage finale est de 820-920 °C, et la température de laminage finale $Tf$ satisfait: $Ar_3 < Tf < Tnr$, où $Ar_3$ est une température à laquelle l'austénite d'acier hypo-eutectoïde commence à se convertir en ferrite, et $Tnr$ est une température critique de non recristallisation : $Ar_3 = 901\text{-}325C\text{-}92Mn\text{-}126Cr\text{-}$

$$Tnr = 887+464C+(6445Nb-644sqrt(Nb))+(732V-230sqrt(V))+890Ti+ \; 363Al-357Si \; ;$$

4) Refroidissement
bobinage d'un élément laminé à une température dans la plage de 480-$Bs$ °C après laminage à chaud, suivi d'un refroidissement à l'air à température ambiante, dans lequel :

$$Bs = 630-45Mn-40V-35Si-30Cr-25Mo-20Ni \; ;$$

5) Traitement à chaud
trempe à une température de chauffage de trempe de $Ac_3$+(30-80) °C, dans lequel $Ac_3$ est une température à laquelle la transformation de l'austénite est terminée :

$$Ac3 = 955-350C-25Mn+51Si+106Nb+100Ti+68Al-11Cr-33Ni- \; 16Cu+67Mo \; ;$$

lorsqu'un cœur d'une tôle d'acier arrive à une température du four, la température est maintenue pendant un temps de maintien de 5-40 min, dans lequel $Ms$ est une température à laquelle la transformation de martensite commence :

$$Ms = 539 - 423C - 30{,}4Mn - 17{,}7Ni - 12{,}1Cr - 11{,}0Si - 7{,}0Mo \ ;$$

dans lequel une vitesse de refroidissement de trempe $V > e^{(5{,}3-2{,}53C-0{,}16Si-0{,}82Mn-0{,}95Cr-1{,}87Mo-160B)}$ °C/s ; revenu à une température de revenu de 400-550 °C ; lorsque la température au cœur de la tôle d'acier arrive à la température du four, la température est maintenue pendant une période de maintien de 20-180 min.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102560274 A
- CN 102134680 A
- CN 101397640 A
- CN 1840724 A